# EUROPEAN PATENT SPECIFICATION

(11) **EP 3 643 098 B1**
(45) Date of publication and mention of the grant of the patent: **13.08.2025**
(21) Application number: 18743616.7
(22) Date of filing: 19.06.2018
(51) Int. Cl.: H04W 12/02

(54) **METHODS AND SYSTEMS FOR PRIVACY PROTECTION OF 5G SLICE IDENTIFIER**
VERFAHREN UND SYSTEME ZUM DATENSCHUTZ EINES 5G-SLICE-IDENTIFIKATORS
SYSTÈMES ET PROCÉDÉS DE PROTECTION DE LA CONFIDENTIALITÉ D'UN IDENTIFIANT DE TRANCHE 5G

(30) Priority: 19.06.2017 US 201762521906 P
(43) Date of publication of application: 29.04.2020
(73) Proprietor: InterDigital Patent Holdings, Inc., Wilmington, DE 19809 (US)
(72) Inventor: FERDI, Samir, Wilmington, DE 19809 (US); BRUSILOVSKY, Alec, Wilmington, DE 19809 (US); CHOYI, Vinod, Kumar, Wilmington, DE 19809 (US); SHAH, Yogendra, C., Wilmington, DE 19809 (US); AHMAD, Saad, Wilmington, DE 19809 (US)
(74) Representative: Interdigital
(86) International application number: PCT/US2018/038209
(87) International publication number: WO 2018/236819

(56) References cited:
- EP-A1- 3 596 898
- SONY: "NSSAI in MSG5", vol. RAN WG2, no. Qingdao, China; 20170627 - 20170629, 16 June 2017 (2017-06-16), XP051306530, Retrieved from the Internet <URL:http://www.3gpp.org/ftp/tsg_ran/WG2_RL2/TSGR2_AHs/2017_06_NR/Docs/> [retrieved on 20170616]
- "3rd Generation Partnership Project; Technical Specification Group Services and System Aspects; System Architecture for the 5G System; Stage 2 (Release 15)", 2 June 2017 (2017-06-02), XP051289066, Retrieved from the Internet <URL:http://www.3gpp.org/ftp/tsg_sa/WG2_Arch/Latest_SA2_Specs/Latest_draft_S2_Specs/> [retrieved on 20170602]
- ERICSSON: "Signalling aspects of network slicing", vol. RAN WG2, no. Qingdao, China; 20170627 - 20170629, 16 June 2017 (2017-06-16), XP051306385, Retrieved from the Internet <URL:http://www.3gpp.org/ftp/tsg_ran/WG2_RL2/TSGR2_AHs/2017_06_NR/Docs/> [retrieved on 20170616]

## Description

### CROSS-REFERENCE TO RELATED APPLICATION

This application claims the benefit of U.S. Provisional Application No. 62/521,906, filed June 19, 2017.

### BACKGROUND

3GPP defines a "network slice" as a logical network that provides specific network capabilities and network characteristics, and defines a "network slice instance" as a set of Network Function instances and the required resources (e.g. compute, storage and networking resources) that form a deployed Network Slice. A network operator may offer services through multiple network slices, and a user equipment or user device (UE) may access multiple Network Slices simultaneously. In order to help a network select the appropriate network slice(s) for a UE in a radio access network (RAN) and/or a Core, the UE may provide Network Slice Selection Assistance Information (NSSAI). NSSAI may be a collection of elements called Single NSSAI (S-NSSAI), which individually may include a Slice Service Type (SST) and, optionally, a Slice Differentiator (SD). An SST may relate to expected network characteristics of a network, such as terms of features and services (e.g., eMBB, MIoT, URLLC). An SD, when present, may assist in more precisely selecting an instance of a network slice among several of the same type described by the SST (e.g., an SD may carry a tenant identification). Provided with the NSSAI, and in combination with subscription data and local operator policies, the network may be able to select the proper slices(s) for the UE.

NSSAI may take various forms. Configured NSSAI may be provisioned by a home public land mobile network (HPLMN) of a UE, per public land mobile network (PLMN). Allowed NSSAI may be obtained by a UE from an access and mobility management function (AMF) of a network upon successful registration. Allowed NSSAI may override any received Configured NSSAI or any previously received Allowed NSSAI. Requested NSSAI may be sent by the UE over an initial Radio Resource Control (RRC) message for registration and may be used by a RAN to select an AMF for the UE. When providing a Requested NSSAI during registration with a given PLMN, the UE may only use S-NSSAIs from the Configured NSSAI of that PLMN. Requested NSSAI may comprise all or part of a Configured NSSAI or an Allowed NSSAI, and may also comprise zero or more S-NSSAI from the Configured NSSAI that are not present in the Allowed NSSAI and not permanently rejected by the PLMN on a prior registration. Requested NSSAI may contain up to eight S-NSSAIs. A Network Slice Selection Policy (NSSP) may be configured by an HPLMN in the UE. The NSSP may comprise one or more NSSP rules enabling association of an application with a particular S-NSSAI.

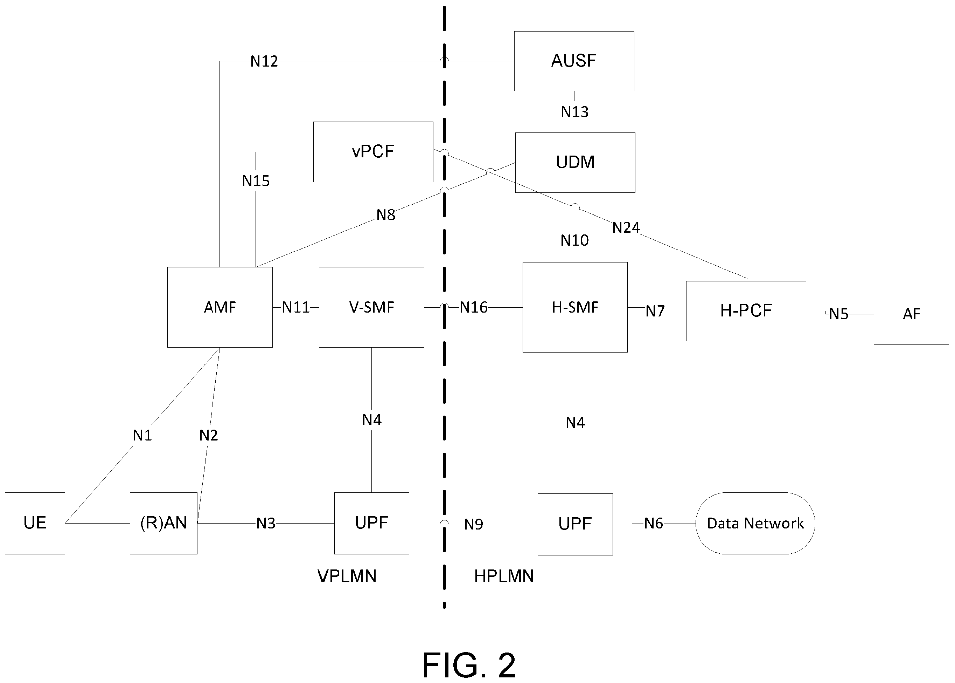

5G communication systems may take many forms. FIG. 2 illustrates an example 5G system roaming architecture with a home network routing scenario. In FIG. 2, a (radio) access network (shown as "(R)AN" in FIG. 2, and hereafter included in the term "RAN") may select the best AMF for a UE based on UE-provided NSSAI or, in the absence thereof, may select a default AMF. The AMF may be the Core Network anchor point for the UE, and may be common to all network slice instances serving the UE. The AMF may select a session management function (SMF) that belongs to a single individual network slice. The selection may be based on UE-provided S-NSSAI during PDU session establishment. Within an individual slice, the SMF may select and/or configure one or more User Plane Functions (UPFs). A given PDU session may belongs to one slice, served by an SMF. Also illustrated in FIG. 2 are various policy control functions (PCFs) and an authentication server function (AUSF), described below.

5G systems may use specific types of identifiers, such as a 5G Globally Unique Temporary Identity (5G-GUTI) or a 5G S-Temporary Mobile Subscriber Identity (5G-S-TMSI). A 5G-GUTI may comprise a Globally Unique AMF ID (GUAMI) and a 5G Temporary Mobile Subscriber Identity (5G-TMSI). A GUAMI may identify an assigned AMF, and a 5G-TMSI may identify a UE uniquely within the AMF. A GUAMI may comprise an MCC, an MNC, an AMF Region ID, an AMF Set ID, and an AMF Pointer. An AMF Region ID may identify a region, an AMF Set ID may uniquely identify an AMF Set with the AMF Region, and an AMF Pointer may uniquely identify an AMF within the AMF Set. A 5G-S-TMSI may comprise an AMF Set ID, an AMF Pointer, and a 5G-TMSI. Here, an AMF Set ID may uniquely identify an AMF Set, and an AMF Pointer may uniquely identify an AMF within the AMF Set. The 5G-TMSI may identify a UE uniquely within the AMF identified by the AMF Set ID and AMF Pointer.

To communicate with 5G systems, a UE may first register with such a system. The UE may send a Requested NSSAI in an initial Registration message so that the RAN may discover and select an appropriate AMF. When the network accepts a new UE registration, the serving AMF allocates a 5G-GUTI that may be sent to the UE in a Register Accept message. In subsequent attachment requests by the UE, the RAN may identify and route Non Access Stratum (NAS) messages to the proper AMF using the 5G-GUTI.

In 5G systems, during a Registration procedure (initial or other type), the AMF may trigger an AMF relocation procedure. During an AMF relocation procedure, the Registration request may be re-routed to another AMF that may be determined to better serve the UE based on slicing, and subscription and policy information. In other circumstances, the set of slices for a UE may be changed any time when registered and keeping the same serving AMF. A PDU Session belonging to a slice that is no longer available may be released or terminated, and associated traffic may be routed through PDU sessions of other slices.

Additionally, during other procedures such as a Registration Update or a Service Request, messages from the UE may be routed to the proper AMF using the 5G-GUTI assigned during initial registration. These messages may not include additional NSSAI information in general. However, when messages do include NSSAI information (e.g., for a Registration Update used to modify the set of network slices of a UE), messages may be confidentiality and integrity protected using an already established security context between the UE and the Network. When access (including initial registration) is performed over non-3GPP access, NSSAI confidentiality protection may be ensured via IKEv2 messaging.

### SUMMARY

Methods and systems are disclosed for protecting the confidentiality and/or integrity of NSSAI exchanged during initial registration while minimizing overhead incurred for an AMF relocation procedure. For example, a method may comprise a UE generating a Requested NSSAI from a Configured NSSAI, wherein the Configured NSSAI comprises one or more S-NSSAI and an attribute indicating privacy protection of the one or more S-NSSAI and the Requested NSSAI comprises nonprivate S-NSSAI of the one or more S-NSSAI. The UE may then send the Requested NSSAI to a 5G system and establish a NAS security context with a first AMF. The UE may then send a secure NAS message to the first AMF comprising the one or more S-NSSAI. Based on receiving the secure NAS message from the UE comprising private and nonprivate S-NSSAI, the 5G system may perform an AMF relocation procedure from the first AMF to a second AMF. Then, the UE may receive a registration accept message from a second AMF, wherein the registration accept message comprises a temporary identifier and the one or more S-NSSAI sent in the secure NAS message, and send a registration confirmation message to the second AMF. The attribute indicating privacy protection may be included in the SD portion of each S-NSSAI, in the SST portion of each S-NSSAI, or included in a map of the Configured NSSAI.

In another example, a UE may generate a Requested NSSAI from a Configured NSSAI, wherein the Configured NSSAI comprises one or more S-NSSAI and an attribute indicating privacy protection of the one or more S-NSSAI and the Requested NSSAI comprises nonprivate S-NSSAI of the one or more S-NSSAI, and send the Requested NSSAI to a 5G system. The UE may then establish a NAS security context with a first AMF. Then, the UE may receive a registration accept message from the first AMF, wherein the registration accept message comprises a temporary identifier, and send a registration confirmation message to the first AMF. The UE may send a registration update message to the first AMF, wherein the registration update message comprises the one or more S-NSSAI. Based on the private and nonprivate S-NSSAI received, the 5G system may perform an AMF relocation procedure from the first AMF to a second AMF. The UE may then receive a registration accept message from the second AMF.

In an example, a UE may generate an encrypted Requested NSSAI from a Configured NSSAI, wherein the Configured NSSAI comprises one or more S-NSSAI and an attribute indicating privacy protection of the one or more S-NSSAI, and send the encrypted Requested NSSAI to an access network. The UE may establish a NAS security context with a first AMF, receive a registration accept message from the first AMF, wherein the registration accept message comprises a temporary identifier, and send a registration confirmation message to the first AMF.

Methods and systems are also disclosed herein to protect against mapping temporary UE identifiers to users of an AMF. An example method may comprise an AMF initiating a NAS security context with a user device. The AMF may generate a session key with the user device and establish the NAS security context. The AMF may generate a temporary identifier for the user device and send the temporary identifier to the user device. When the AMF determines to page the user device, the AMF may generate a second temporary identifier, apply a cryptographic hash to the second temporary identifier using the session key to generate a hashed identifier, and send the hashed identifier to an access network to contact the user device. The user device may apply a cryptographic hash to the received temporary identifier using the session key and refresh the hash when the temporary identifier is refreshed.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

The invention is defined by the appended independent claims.

### BRIEF DESCRIPTION OF THE DRAWINGS

FIG. 1A is a system diagram of an example communications system in which one or more disclosed embodiments may be implemented.
FIG. 1B is a system diagram of an example WTRU that may be used within the communications system illustrated in FIG. 1A.
FIG. 1C is a system diagram of an example radio access network and an example core network that may be used within the communications system illustrated in FIG. 1A.
FIG. 1D is a system diagram of another example radio access network and another example core network that may be used within the communications system illustrated in FIG. 1A.
FIG. 1E is a system diagram of another example radio access network and another example core network that may be used within the communications system illustrated in FIG. 1A.
FIG. 2 illustrates an example 5G system roaming architecture;
FIG. 3 illustrates an example S-NSSAI with a new attribute;
FIG. 4 illustrates an example NSSAI with a new attribute;
FIG. 5 illustrates an example NSSAI with encryption;
FIG. 6 is a sequence diagram illustrating NSSAI confidentiality protection;
FIG. 7 is another sequence diagram illustrating NSSAI confidentiality protection; and
FIG. 8 is yet another sequence diagram illustrating NSSAI confidentiality protection.

### DETAILED DESCRIPTION

A detailed description of illustrative embodiments will now be described with reference to the various Figures. Although this description provides a detailed example of possible implementations, it should be noted that the details are intended to be exemplary and in no way limit the scope of the application.

3GPP standards require that NSSAI shall be confidentiality protected whenever a NAS security context is available. Further, 3GPP standards require support of network-controlled privacy of network slice information for slices a UE accesses. When a UE is aware or configured such that privacy considerations apply to the NSSAI, the UE shall not include the NSSAI in NAS signaling unless the UE has a NAS security context, and the UE shall not include the NSSAI in unprotected RRC signaling. Thus, it is implied that privacy sensitive NSSAIs should not be sent in initial Registration messages where confidentiality protection may not be possible, such as in the absence of an established and current security context. A lack of confidentiality protection for privacy sensitive NSSAIs may compromise the privacy of subscribers sending or receiving those NSSAIs. For example, access to certain slices while sending an unprotected NSSAI could expose the presence of subscribers of a particular group in a given area such as, for example, first responders, police officers, public safety users, dedicated enterprise slice users, and other groups.

Therefore, it is desirable to provide solutions that ensure confidentiality protection of NSSAI when required and when exchanged between a UE and a Network. Moreover, a solution should offer non-traceability and unlinkability characteristics that may prevent an attacker from tracing a UE by intercepting a series of confidentiality protected NSSAI or by linking together any two or more confidentiality protected NSSAI messages, respectively.

If a UE does not include a Requested NSSAI or subset thereof (e.g., one or more S-NSSAIs) in initial unprotected RRC/NAS messages for privacy protection or other reasons, a non-optimal initial AMF may be selected by the RAN. Non-optimal AMF selection may lead to an AMF relocation when the full Requested NSSAI may be sent on a subsequent protected message. Therefore, solutions described herein consider both privacy and performance so as to minimize signaling overhead incurred due to NSSAI privacy protection mechanisms when compared to those where no NSSAI privacy is enforced.

Another consideration of NSSAI and S-NSSAI privacy may involve potential linkability with other system identifiers, such as a 5G-GUTI. A network operator may decide on a network deployment where an AMF may be dedicated exclusively to private S-NSSAI(s). Such a deployment may be, for example, driven by requirements to isolate NAS signaling termination points in the Core Network between "private" and "public" slices. For example, a PLMN may anchor public safety users to the network via the same dedicated AMF. In such an example, an exposed 5G-GUTI or 5G-S-TMSI may result in a breach of privacy for that particular group of users, similar to how an exposure of private S-NSSAIs would. In Evolved Packet Systems (EPSs), the lack of specific requirements on how frequently temporary identifiers shall be refreshed has led to situations where the persistence of those identifiers has been observed in several networks for multiple days. If such persistency is present in 5G systems, an unauthorized party may be able to map a particular AMF dedicated to certain types of private network slices to the users of those private network slices and may thereby determine the presence of such users in a given tracking area or cell area (e.g., when Smart Paging techniques are used).

Therefore, solutions should consider identifiers such as 5G-GUTI and 5G-S-TMSI in addition to NSSAI to prevent compromised user privacy by linkage with private S-NSSAI(s) or with an AMF dedicated to those S-NSSAI(s).

It is recognized herein that current methods and systems for performing procedures in 5G systems may not adequately protect the confidentiality and/or integrity of exchanged NSSAI and other identifiers. For example, during an initial registration procedure, the Requested NSSAI sent at either the RRC or NAS layer is not confidentiality (or integrity) protected during an initial registration procedure because a security context has not yet been established between the UE and the Network. In methods and systems that protect NSSAI by not initially sending unprotected NSSAI, a non-optimal AMF may be selected for use by a UE, and an AMF relocation procedure may need to be performed when the NSSAI is later sent in a protected manner, wasting time and resources. In methods and systems with persistent UE identifiers, it may be possible to map the identifiers to users of an AMF and track those users. Therefore, it is recognized herein that various features are lacking in current methods and systems for handling NSSAI and other UE identifiers, such as 5G-GUTI and 5G-S-TMSI, in a 5G system. Various embodiments described herein address solutions to these and other issues.

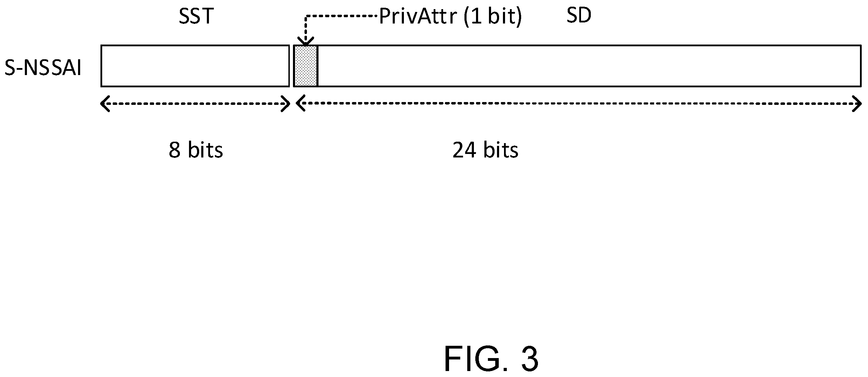

In embodiments, privacy attributes are introduced to NSSAI and/or S-NSSAI. A new privacy attribute (henceforth called "PrivAttr") may be added to each S-NSSAI. As illustrated in FIG. 3, a bit may be reserved from the 24-bit Slice Differentiator (SD) part of the S-NSSAI to store the PrivAttr. Alternatively, the PrivAttr may be encoded into or comprise one of the eight bits of the SST portion of the S-NSSAI. The bit may represent if the slice is subject to privacy considerations or not. For example, a value PrivAttr=1 for a particular S-NSSAI may indicate that the S-NSSAI should be sent in a confidentiality protected manner. A value PrivAttr=0 may indicate that the S-NSSAI may be sent in the unprotected initial RRC/NAS messages. Two network slice instances complying with the same network slice type (or even same SD) may be further differentiated based on their respective PrivAttr attributes, which may be used by an NSSP for fine-grained association of an application with a particular S-NSSAI.

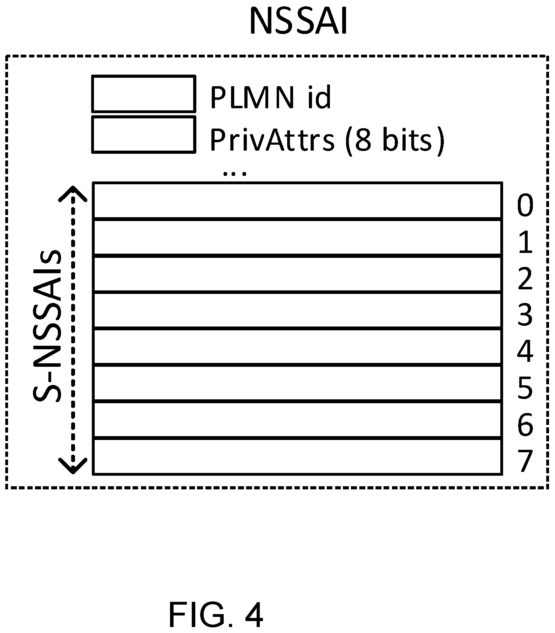

In embodiments, privacy information may be grouped at the NSSAI level, as illustrated in FIG. 4. In such embodiments, it may be assumed that an NSSAI is comprised of a fixed number of S-NSSAIs. In the example illustrated in FIG. 4, an NSSAI comprises eight S-NSSAIs. The privacy attributes for the S-NSSAIs may be stored in a map of privacy attributes, the length of which is determined by the number of S-NSSAIs. Each privacy attribute in the map may be respectively associated with an S-NSSAI of the NSSAI. For example, in FIG. 4, the PrivAttrs map is eight bits, one bit for each S-NSSAI. A UE may search such a map to determine which S-NSSAI are private.

In embodiments, for each PLMN, the associated HPLMN may provision the UE with a Configured NSSAI comprising zero or more S-NSSAIs having respective PrivAttr bits set to 1. Two PLMNs may be configured with respective S-NSSAIs similar in many or all aspects, but set with different PrivAttr values. Such a configuration may occur in, for example, two PLMNs in different jurisdictions with different regulatory requirements regarding users' privacy. A PrivAttr attribute may be stored via one or more of the following: on a UE in Configured NSSAI; over the air in Requested or Allowed NSSAI; in S-NSSAIs stored in the subscription data; and any other feasible NSSAI.

An HPLMN may provision a UE with a Configured NSSAI comprising a special value S-NSSAI. Such a special value may be a value different from the standard values 1, 2, and 3 (e.g., SST=OxFFFF), or may be an indicator that the UE may request additional S-NSSAI after a security association has been established. The UE may interpret the list of S-NSSAI being incomplete and may obtain additional private S-NSSAIs from a PLMN after RRC/NAS security has been established.

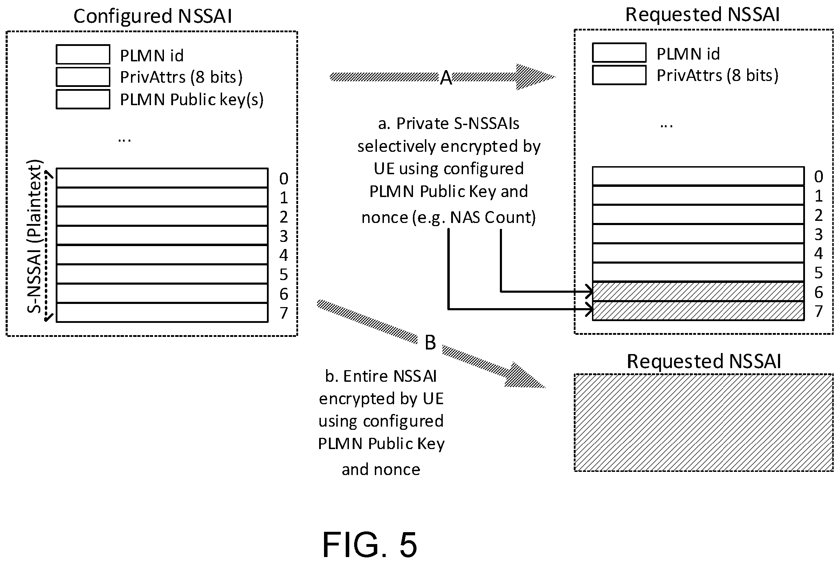

As illustrated in FIG. 5, an HPLMN may provision in a UE a Configured NSSAI with a PLMN's Public Key or a public key or certificate of a trusted entity. Such a public key or certificate may be used by the UE to protect or anonymize (e.g., apply encryption or one-way hashing) content of the initial Requested NSSAI. The content may be protected or anonymized selectively on the private S-NSSAIs, shown as option A in FIG. 5, or on the entire Requested NSSAI, shown as option B in FIG. 5. A public key or certificate may be updated when required via an OTA Procedure. A public key may also be obtained dynamically from the PLMN via broadcast System Information Blocks (SIB). Such a public key may be updated after the UE successfully registers through an AMF-triggered UE Configuration Update procedure. A public key or certificate may be stored in non-volatile memory on the UE (e.g., on the ME, UICC, or other component such that the public key may survive a device boot operation) so as to be useful in one or more subsequent initial Registration messages.

There may be a set of public keys. For example, there may be a public key of an AN and another public key for the Core Network. The public key of the AN may be used to encrypt NSSAI at the RRC layer, and the public key of the Core Network may be used at the NAS layer.

Anonymized NSSAI may be generated by a PLMN hashing plaintext NSSAI with one or more system parameters. Such anonymized NSSAI may be generated periodically. In each period, which may be determined by policy, new anonymized S-NSSAIs may be generated and communicated to the UE in a secure manner. Pre-provisioned S-NSSAIs may be anonymized by the UE based on a pre-provisioned key derivation function (KDF) (e.g., a one-way hash function) algorithm and pre-provisioned system parameters. Anonymized S-NSSAIs may be sent to the PLMN. The PLMN, on receiving the anonymized S-NSSAIs, may iterate through the list of plaintext S-NSSAIs. A plaintext S-NSSAI may be input to the KDF function with the agreed-upon system parameters to obtain the anonymized S-NSSAI corresponding to the plaintext S-NSSAI. Such a process may be performed per UE or group of UEs and may also be based on various policies. The process may be scalable when the list of S-NSSAIs is small (e.g., in the tens or <= 100 S-NSSAIs); however, the process may not be efficient for larger lists of S-NSSAIs.

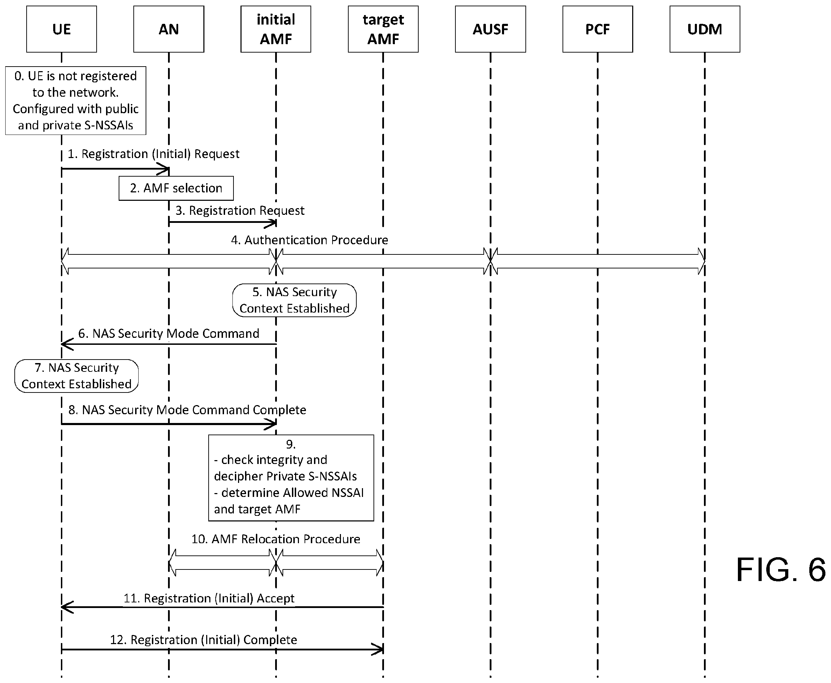

FIG. 6 illustrates an example initial Registration call flow of a UE with NSSAI privacy protection performed during NAS Security Setup. The steps of the process are described below.

At step 0, the UE is not yet registered into the network. The UE may be provisioned with a Configured NSSAI that the UE may access. The Configured NSSAI may comprise one or more S-NSSAI. S-NSSAI may be identified as privacy sensitive ("private S-NSSAIs") and/or not privacy sensitive. For example, the one or more private S-NSSAIs may have PrivAttr attributes set to 1, as described above.

At step 1, the UE, using an NSSP, may generate a Requested NSSAI by filtering out, or excluding, private S-NSSAIs from the Configured NSSAI. Such filtering may allow the UE to send the private S-NSSAIs only after NAS messaging confidentiality/integrity protection has been established. As such, the UE may avoid sending NSSAI unprotected in the initial Registration Request message. Using the NSSP, the UE may determine which S-NSSAIs require confidentiality protection by reading their respective PrivAttr attributes, as described above. The UE may ignore private S-NSSAIs and add nonprivate S-NSSAIs to the Requested NSSAI. Alternatively, the UE may begin by copying the Configured NSSAI and removing private S-NSSAIs. The UE may provide an indication to the network in the Registration request that the provided Requested NSSAI is partial and that additional private S-NSSAI may be exchanged when RRC/NAS communication becomes protected/secure. Such an indication may be referred to as a Partial Information Request (PIR) indication. This PIR indication may be encoded into the Requested NSSAI. The PIR indication may also be generalized as a separate Information Element (IE) to indicate postponement of the sending of any private/confidential information (not just private S-NSSAI) until after a security association is completed between the UE and the network. It should be appreciated that the Requested NSSAI may be empty if all S-NSSAI require confidentiality protection. Assuming that the UE needs to send a NSSAI in an RRC layer separate from the one in the NAS layer, the filtering of private S-NSSAI until a (e.g., NAS or AS) security context is established may apply equally to both layers (e.g., NAS or AS).

At step 2, upon receiving the Requested NSSAI in RRC, the RAN may select the best possible AMF based on information in the Requested NSSAI. Because NSSAI information may be incomplete or missing from this initial request due to NSSAI privacy considerations, the RAN may select a sub-optimal AMF, e.g., a default AMF.

At step 3, the initial AMF, which may be a default AMF, may receive the forwarded NAS request from the RAN.

At step 4, the AMF may initiate an authentication procedure between the UE and AUSF (UDM). The procedure may be similar to EPS AKA (e.g., EPS AKA*, etc.) or EAP AKA procedures (e.g., EAP AKA', EAP-AKA,* etc.) transported over NAS signaling.

At step 5, an NAS security context may be established. The NAS security context may include stored security parameters and necessary keying material, such as a NAS master key and one or more derived NAS confidentiality and integrity keys.

At step 6, the initial AMF may send an integrity-protected, non-encrypted NAS Security Mode Command (SMC) to the UE. The SMC may specify ciphering and integrity algorithms in order to derive corresponding keys. The ciphering algorithm should have randomization built-in such that any two encrypted messages carrying the same S-NSSAI cannot be related to one another by an eavesdropper. Such a principle may be achieved by using a unique nonce (e.g., NAS Count) for each new message, e.g., by using AES CTR mode. Based on the presence of a PIR indication in the initial Registration request, and conditional to operator policy, the initial AMF may also include in the SMC message a request for the UE to provide confidential NSSAI or S-NSSAI the UE may have withheld from the initial Registration message.

At step 7, a NAS security context may be established by the UE, including generated NAS confidentiality and integrity keys based on the NAS master key established during authentication and parameters received in the SMC message.

At step 8, the UE may send an integrity and confidentiality protected SMC Complete message. The UE may use the NSSP and may provide a Requested NSSAI including the S-NSSAIs of the Configured NSSAI, i.e., private S-NSSAI may not be filtered out at this time. As described above, the ciphering algorithm may ensure that any two encrypted messages carrying the same S-NSSAI cannot be related to one another by an eavesdropper.

At step 9, the initial AMF may check the received SMC Complete message for integrity and may decrypt the message's content to extract the new Requested NSSAI. This new Requested NSSAI may be used in conjunction with policy and subscription information to determine an Allowed NSSAI for the UE. The AMF may verify the received S-NSSAIs against the S-NSSAIs from the subscription data and may verify PrivAttr value consistency.

At step 10, given the determined Allowed NSSAI, and based on policy/subscription information, the initial AMF may determine that a target AMF is more suited to serve the UE. The initial AMF may initiate an AMF relocation procedure. During such a procedure, the initial AMF may transfer the Allowed NSSAI and the security context to the target AMF. Alternatively, a new authentication procedure between the UE and target AMF and/or a Security Mode Command procedure may be performed to establish a new security context and derive new keys in the UE and target AMF. Such a procedure may be necessary if the target AMF has a different level of support for security algorithms and/or may be necessary to ensure cryptographic isolation for forward/backward secrecy when the initial AMF and target AMF do not have access to each other's NAS master and derived keys. During the AMF relocation procedure and/or new authentication procedure, the RAN may be updated with the new serving AMF and Allowed NSSAI.

At step 11, the target AMF may send back a protected Registration Accept message to the UE comprising a 5G-GUTI and the list of Allowed NSSAI (including the private S-NSSAIs) based on policy/subscription information. AS Security setup between the network (target AMF, AN) and UE may also take place.

At step 12, the UE may confirm to the target AMF the assignment of the new 5G-GUTI.

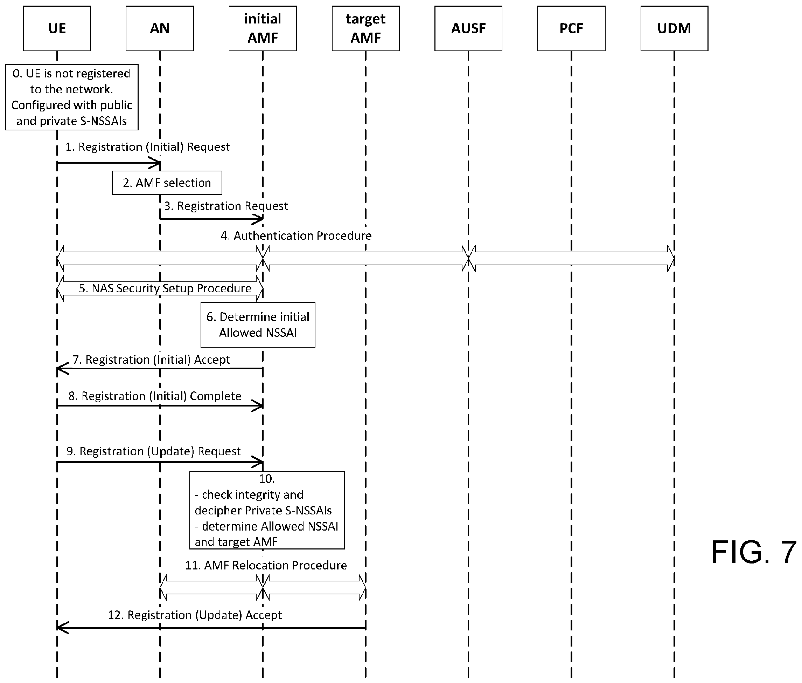

FIG. 7 illustrates an example Registration call flow with NSSAI privacy protection performed during a triggered subsequent Registration update procedure. The steps of the process are described below.

Steps 0 through 4 are similar to those with respect to FIG. 6, above.

At step 5, a NAS security setup procedure may be performed between the UE and the initial AMF. Unlike the security procedure of FIG. 6, the NAS Setup messages may not carry private S-NSSAI information.

At step 6, the initial AMF may determine, based on Requested NSSAI and based on local policy and subscription information, the Allowed NSSAI for the UE.

At step 7, the initial AMF may include in a Registration Accept message the Allowed NSSAI and may indicate to the UE that the UE is authorized to send confidential NSSAI the AMF may have withheld from the initial Registration message in a subsequent Registration Update. Such an indication may comprise, for example, a flag, a timer (e.g., a TAU timer), or both. The presence of the indication, such as the insertion of a flag and/or timer, may be conditional to the presence of a PIR indication in the initial Registration request and may be subject to local policy and subscription information.

At step 8, the UE may confirm to the initial AMF the assignment of the new 5G-GUTI.

At step 9, upon detection of the authorization indication (e.g., an authorization flag and/or expiry of an authorization timer), the UE using the NSSP may include a Requested NSSAI in the confidentiality/integrity protected Registration Update message, including the S-NSSAIs of the Configured NSSAI, i.e., private S-NSSAI may not be filtered out. The UE may alternatively not require an explicit authorization indication from the network to send "unsent" private S-NSSAIs in the protected Registration Update message. The option of using a combination of PIR in the UE initial Registration request and an authorization indication in the Registration Accept from the AMF as an indication to send private S-NSSAIs may keep the process under network control. For example, allowing the network to control the process may allow the network to avoid a subsequent Request Update of private S-NSSAIs if the network does not support private S-NSSAIs temporarily or in the current registration area.

Steps 10 and 11 may be performed similarly to steps 9 and 10 of FIG. 6, described above.

At step 12, the target AMF may send back in the protected Registration Accept message a list of the Allowed NSSAI, including the private S-NSSAIs, based on policy/subscription information.

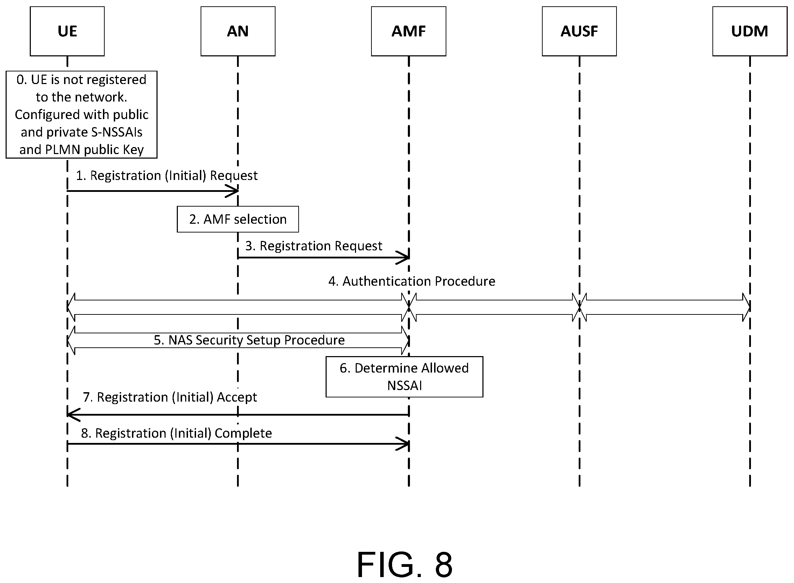

FIG. 8 illustrates an example Registration call flow using a configured PLMN Public Key, as described above. The steps of the process are described below.

At step 0, the UE is not yet registered into the network and is configured with NSSAI, which may comprise one or more S-NSSAI that may be identified as privacy-sensitive, and the PLMN Public Key.

At step 1, the UE may generate a Requested NSSAI with encryption. The UE may use RSA using a nonce, such as NAS UL Count for example, to encrypt the Requested NSSAI or a portion thereof, as described above. The UE may also use a one-time generated symmetric key to encrypt the Requested NSSAI. The UE may then send the encrypted Requested NSSAI along with the nonce and RSA encrypted symmetric key to the AN. The symmetric key may be used to also provide message integrity protection (e.g., using AES-GCM mode). Alternatively, the UE may use the serving PLMN Public Key in an Elliptic Curve Integrated Encryption Scheme (ECIES) to encrypt and confidentiality protect the Requested NSSAI. If the serving PLMN Public key is obtained from the serving PLMN instead of provisioned by the HPLMN, the UE may first detect the serving PLMN Public Key via a SIB or retrieve the serving PLMN Public Key from storage where the serving PLMN Public Key may be saved from a previous AMF Configuration Update procedure. If the UE is not able to obtain the serving PLMN Public key, the UE may choose to fall back to procedures described in other embodiments.

At step 2, upon receiving the Registration Request, the RAN may decrypt the Requested NSSAI (e.g., from the RRC layer) using its associated private key and the received symmetric key, if present (e.g., using RSA, ECIES). Using the extracted Requested NSSAI, the RAN may attempt to select the best possible AMF for the UE. The NSSAI information may not be missing any privacy sensitive NSSAI, and therefore the RAN may be able to make the best decision during AMF selection.

At step 3, the RAN may forward the request to the selected AMF.

At steps 4 and 5, the AMF may authenticate and setup a security context with the UE.

At step 6, using its associated private key (and the received symmetric key, if present) the AMF may decrypt the Requested NSSAI (e.g., from the NAS PDU). The Requested NSSAI may be used in conjunction with policy and subscription information to determine the Allowed NSSAI for the UE.

At step 7, the AMF may send back in the protected Registration Accept message a 5G-GUTI and the list of Allowed NSSAI, including the private S-NSSAIs, based on policy/subscription information. AS Security setup between the network (target AMF, AN) and UE may take place at this time.

At step 8, the UE may confirm to the target AMF the assignment of the new 5G-GUTI.

In an embodiment, a UE may not be required to send the private S-NSSAI or to indicate a partial NSSAI in the clear, over the air, e.g., during a Registration as in above-described embodiments. Such an embodiment may use subscription data to indicate implicitly to the serving PLMN which private S-NSSAI shall be used. S-NSSAIs the UE subscribes to may be stored in subscription data. The PLMN may retrieve or request such subscription data in order to determine which S-NSSAIs to serve the UE with. Private S-NSSAIs may be marked as default so that the PLMN may offer the private NSSAIs in the Allowed NSSAI though the UE may not need to send any of the private S-NSSAI. The HPLMN may provision the UE with a Configured NSSAI without private S-NSSAI or may include private S-NSSAI marked with a PrivAttr attribute along with NSSP rules filtering the private S-NSSAIs out from the initial Requested NSSAI as in embodiments described above. When the initial AMF determines an Allowed NSSAI for the UE by including private S-NSSAIs obtained from the subscription data but not present in the initial Requested NSSAI, the AMF may trigger an AMF relocation procedure if a target AMF is more appropriate to serve the NSSAI matching slices to the UE.

An embodiment using an implicit approach, such as the immediately preceding embodiment, may be altered by using a UE explicit indication. When the UE sends the Requested NSSAI (without any private S-NSSAI) in the unprotected initial Registration message, the UE may indicate to the network that the UE wishes to be informed about private S-NSSAIs in the current registration area. Such an indication may be conveyed in the form of a special value S-NSSAI, as described in above embodiments, or as a separate standalone IE (e.g., PIR). The presence of such an indication may be interpreted by the PLMN as the list of S-NSSAI being incomplete and that the PLMN may receive additional privacy sensitive S-NSSAIs after establishment of a security association with the UE. Upon receiving a Registration Request containing such an indication, the AMF may include in the Allowed NSSAI the private S-NSSAIs (marked as private, e.g., with PrivAttr attributes) obtained from the subscription data and which may be served in the current registration area. The AMF may send the Allowed NSSAI to the UE in the (protected) Registration Accept message. Upon receiving the message, the UE may send a subsequent (protected) Registration request including those private S-NSSAIs. An AMF relocation may take place during the procedure (as in embodiments described above). In an alternative or additional embodiment, the UE may obviate the need to send specific privacy sensitive S-NSSAI indicators, and the specific requirements may be stored in the UE subscription data held by the HPLMN and provided as supplementary information to the PLMN during the registration procedure flow.

Enforcing a frequent refresh of temporary identifiers in the AMF (e.g., during state transition CM-Idle -> CM-Connected) may enhance the privacy of users and may mitigate the possibility of an attacker tracking a user by detecting the temporary identifier sent in the clear in paging message(s). However, such a measure alone may not be sufficient because the AMF may still be uniquely identified by an eavesdropper that wishes to extract the <AMF Set ID> <AMF Pointer> data (assumed to be pseudo-static) from an intercepted 5G-S-TMSI sent in the paging message(s). As described above, in the case of an AMF dedicated to a set of slices, persistent identifiers may aid in revealing the location of a particular class of users using those slices and thus indirectly aid in violating privacy of a user.

Encrypting the 5G-S-TMSI (e.g., using the UE/AMF symmetric key derived from the NAS master key or using a PLMN public-private key pair) may provide anonymity, but may require additional overhead in processing and secure public key distribution if using asymmetric encryption. Using a cryptographic function for encryption may provide more protection than is necessary because the UE may only need to match its saved current 5G-S-TMSI to the one present in paging requests until the next temporary id refresh. Therefore, a one-way function solution is described that uses a cryptographic hash to generate a pseudonym id.

By using a cryptographic hash of a temporary id (e.g., 5G-S-TMSI) in the paging message, the UE may match against a hash computed from the one that was assigned to the UE during registration (e.g., 5G-GUTI) in a manner more efficient than using decryption. The difficulty for an attacker to correlate multiple pseudonym ids to a particular dedicated AMF increases significantly when compared to processes where temporary ids are sent in the clear.

An example method using a cryptographic hash may be performed as follows. The UE may indicate to the AMF, for example via the UE's security capabilities during registration, that the UE supports a cryptographically hashed pseudonym id. During NAS Security Setup, the UE and AMF may derive a session key, K_{hash_tempid}, for the purpose of applying a cryptographic hash on the UE temporary id. When the AMF allocates a new 5G-GUTI to the UE during Registration, the UE may apply a cryptographic hash (e.g., using SHA-2 with the K_{hash_tempid} as the secret key and the current NAS UL Count as a salt) on the 5G-S-TMSI and save the hash. The UE may refresh the hash when the 5G-GUTI is refreshed or the NAS UL Count is changed. When the AMF wishes to page a UE, the AMF may generate a hashed 5G-S-TMSI and send the hashed 5G-S-TMSI to the RAN (e.g., a specific gNB if Smart Paging is used) to contact the UE. The UE may receive one or more paging records. Each paging record may have an associated paging record identifier, which may comprise a protected 5G-S-TMSI. When the idle UE is scheduled for paging, the UE may compare the stored hash to each paging record identifier of the one or more received paging records until the UE finds a match with the stored hash. The UE may then process the paging record associated with the paging record identifier matching the stored hash. The UE may also wait until the next paging opportunity to find a match.

The 5G-S-TMSI size may be relatively short (e.g., EPS uses a 40-bit S-TMSI), so the result of the hash function may be truncated to fit the size of the 5G-S-TMSI (e.g., from 256 bits to 40 bits if using SHA-256 as the hashing primitive). The probability of collision may increase (e.g., from 2¹²⁸ to 2²⁰), however, in practice, the probability of an attacker being able to track a user should remain low because collision would have to occur simultaneously on two UE's schedule for paging (e.g., listening to the same P-RNTI) within a given tracking area.

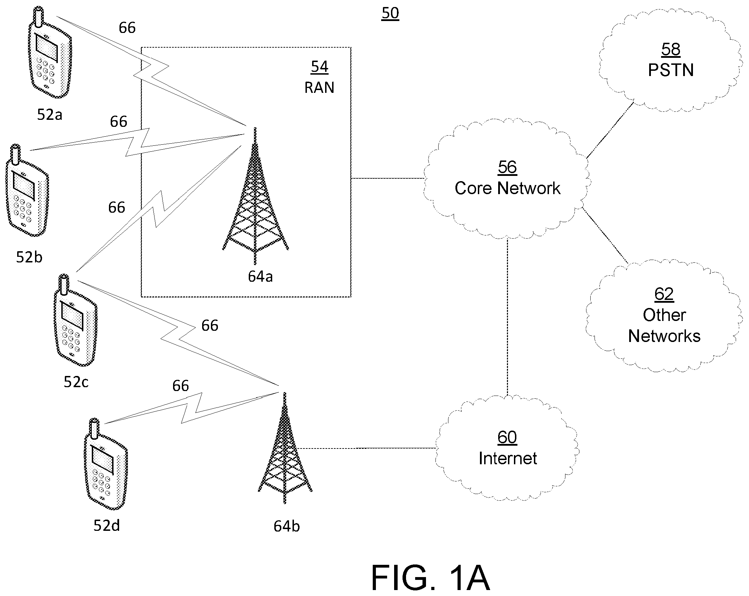

FIG. 1A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications system 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 1A, the communications system 100 may include wireless transmit/receive units (WTRUs), e.g., WTRUs, 102a, 102b, 102c and/or 102d (which generally or collectively may be referred to as WTRU 102), a radio access network (RAN) 103/104/105, a core network 106/107/109, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications system 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106/107/109, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 103/104/105, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in some embodiments, the base station 114a may include three transceivers, e.g., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 115/116/117, which may be any suitable wireless communication link (e.g., radio frequency (RF), microwave, infrared (IR), ultraviolet (UV), visible light, etc.). The air interface 115/116/117 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 103/104/105 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 115/116/117 using Long Term Evolution (LTE) and/or LTE-Advanced (LTE-A).

In other embodiments, the base station 114a and the WTRUs 102a, 102b, 102c may implement radio technologies such as IEEE 802.16 (e.g., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, and the like. In some embodiments, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 1A, the base station 114b may have a direct connection to the Internet 110. Thus, the base station 114b may not be required to access the Internet 110 via the core network 106/107/109.

The RAN 103/104/105 may be in communication with the core network 106/107/109, which may be any type of network configured to provide voice, data, applications, and/or voice over internet protocol (VoIP) services to one or more of the WTRUs 102a, 102b, 102c, 102d. For example, the core network 106/107/109 may provide call control, billing services, mobile location-based services, pre-paid calling, Internet connectivity, video distribution, etc., and/or perform high-level security functions, such as user authentication. Although not shown in FIG. 1A, it will be appreciated that the RAN 103/104/105 and/or the core network 106/107/109 may be in direct or indirect communication with other RANs that employ the same RAT as the RAN 103/104/105 or a different RAT. For example, in addition to being connected to the RAN 103/104/105, which may be utilizing an E-UTRA radio technology, the core network 106/107/109 may also be in communication with another RAN (not shown) employing a GSM radio technology.

The core network 106/107/109 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 103/104/105 or a different RAT.

Some or all of the WTRUs 102a, 102b, 102c, 102d in the communications system 100 may include multi-mode capabilities, e.g., the WTRUs 102a, 102b, 102c, 102d may include multiple transceivers for communicating with different wireless networks over different wireless links. For example, the WTRU 102c shown in FIG. 1A may be configured to communicate with the base station 114a, which may employ a cellular-based radio technology, and with the base station 114b, which may employ an IEEE 802 radio technology.

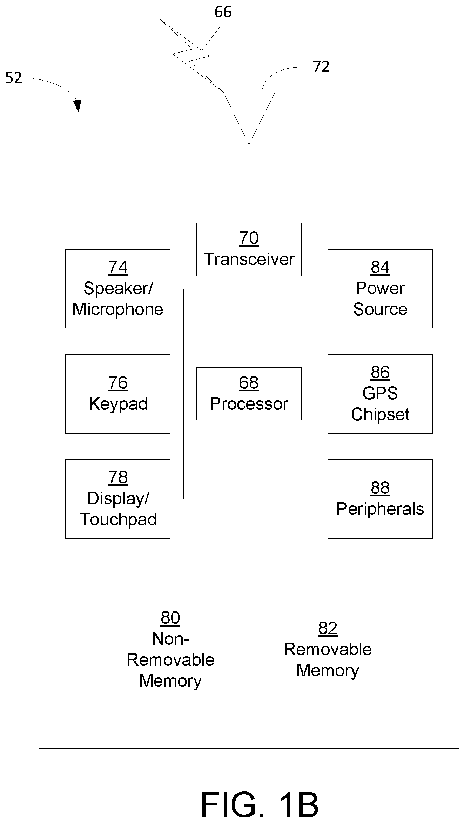

FIG. 1B is a system diagram of an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and other peripherals 138. It will be appreciated that the WTRU 102 may include any subcombination of the foregoing elements while remaining consistent with an embodiment. Also, embodiments contemplate that the base stations 114a and 114b, and/or the nodes that base stations 114a and 114b may represent, such as but not limited to transceiver station (BTS), a Node-B, a site controller, an access point (AP), a home node-B, an evolved home node-B (eNodeB), a home evolved node-B (HeNB or HeNodeB), a home evolved node-B gateway, and proxy nodes, among others, may include some or all of the elements depicted in FIG. 1B and described herein.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 115/116/117. For example, in some embodiments, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 1B as a single element, the WTRU 102 may include any number of transmit/receive elements 122. More specifically, the WTRU 102 may employ MIMO technology. Thus, in some embodiments, the WTRU 102 may include two or more transmit/receive elements 122 (e.g., multiple antennas) for transmitting and receiving wireless signals over the air interface 115/116/117.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 115/116/117 from a base station (e.g., base stations 114a, 114b) and/or determine its location based on the timing of the signals being received from two or more nearby base stations. It will be appreciated that the WTRU 102 may acquire location information by way of any suitable location-determination implementation while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth^{®} module, a frequency modulated (FM) radio unit, a digital music player, a media player, a video game player module, an Internet browser, and the like.

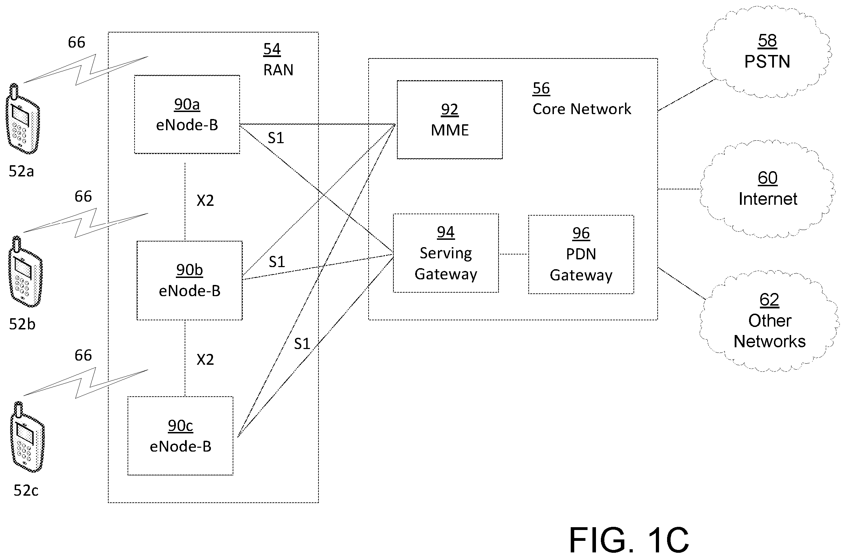

FIG. 1C is a system diagram of the RAN 103 and the core network 106 according to an embodiment. As noted above, the RAN 103 may employ a UTRA radio technology to communicate with the WTRUs 102a, 102b, 102c over the air interface 115. The RAN 103 may also be in communication with the core network 106. As shown in FIG. 1C, the RAN 103 may include Node-Bs 140a, 140b, 140c, which may each include one or more transceivers for communicating with the WTRUs 102a, 102b, 102c over the air interface 115. The Node-Bs 140a, 140b, 140c may each be associated with a particular cell (not shown) within the RAN 103. The RAN 103 may also include RNCs 142a, 142b. It will be appreciated that the RAN 103 may include any number of Node-Bs and RNCs while remaining consistent with an embodiment.

As shown in FIG. 1C, the Node-Bs 140a, 140b may be in communication with the RNC 142a. Additionally, the Node-B 140c may be in communication with the RNC 142b. The Node-Bs 140a, 140b, 140c may communicate with the respective RNCs 142a, 142b via an Iub interface. The RNCs 142a, 142b may be in communication with one another via an Iur interface. Each of the RNCs 142a, 142b may be configured to control the respective Node-Bs 140a, 140b, 140c to which it is connected. In addition, each of the RNCs 142a, 142b may be configured to carry out or support other functionality, such as outer loop power control, load control, admission control, packet scheduling, handover control, macrodiversity, security functions, data encryption, and the like.

The core network 106 shown in FIG. 1C may include a media gateway (MGW) 144, a mobile switching center (MSC) 146, a serving GPRS support node (SGSN) 148, and/or a gateway GPRS support node (GGSN) 150. While each of the foregoing elements are depicted as part of the core network 106, it will be appreciated that any one of these elements may be owned and/or operated by an entity other than the core network operator.

The RNC 142a in the RAN 103 may be connected to the MSC 146 in the core network 106 via an IuCS interface. The MSC 146 may be connected to the MGW 144. The MSC 146 and the MGW 144 may provide the WTRUs 102a, 102b, 102c with access to circuit-switched networks, such as the PSTN 108, to facilitate communications between the WTRUs 102a, 102b, 102c and traditional land-line communications devices.

The RNC 142a in the RAN 103 may also be connected to the SGSN 148 in the core network 106 via an IuPS interface. The SGSN 148 may be connected to the GGSN 150. The SGSN 148 and the GGSN 150 may provide the WTRUs 102a, 102b, 102c with access to packet-switched networks, such as the Internet 110, to facilitate communications between and the WTRUs 102a, 102b, 102c and IP-enabled devices.

As noted above, the core network 106 may also be connected to the networks 112, which may include other wired or wireless networks that are owned and/or operated by other service providers.

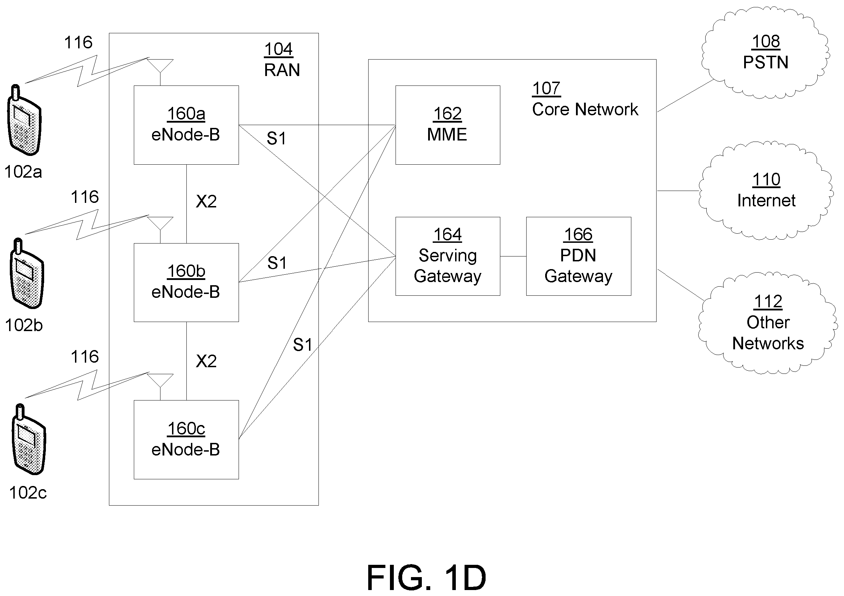

FIG. 1D is a system diagram of the RAN 104 and the core network 107 according to an embodiment. As noted above, the RAN 104 may employ an E-UTRA radio technology to communicate with the WTRUs 102a, 102b, 102c over the air interface 116. The RAN 104 may also be in communication with the core network 107.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In some embodiments, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, 160c may be associated with a particular cell (not shown) and may be configured to handle radio resource management decisions, handover decisions, scheduling of users in the uplink (UL) and/or downlink (DL), and the like. As shown in FIG. 1D, the eNode-Bs 160a, 160b, 160c may communicate with one another over an X2 interface.

The core network 107 shown in FIG. 1D may include a mobility management gateway (MME) 162, a serving gateway 164, and a packet data network (PDN) gateway 166. While each of the foregoing elements are depicted as part of the core network 107, it will be appreciated that any one of these elements may be owned and/or operated by an entity other than the core network operator.

The MME 162 may be connected to each of the eNode-Bs 160a, 160b, 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may also provide a control plane function for switching between the RAN 104 and other RANs (not shown) that employ other radio technologies, such as GSM or WCDMA.

The serving gateway 164 may be connected to each of the eNode-Bs 160a, 160b, 160c in the RAN 104 via the S1 interface. The serving gateway 164 may generally route and forward user data packets to/from the WTRUs 102a, 102b, 102c. The serving gateway 164 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 164 may also be connected to the PDN gateway 166, which may provide the WTRUs 102a, 102b, 102c with access to packet-switched networks, such as the Internet 110, to facilitate communications between the WTRUs 102a, 102b, 102c and IP-enabled devices.

The core network 107 may facilitate communications with other networks. For example, the core network 107 may provide the WTRUs 102a, 102b, 102c with access to circuit-switched networks, such as the PSTN 108, to facilitate communications between the WTRUs 102a, 102b, 102c and traditional land-line communications devices. For example, the core network 107 may include, or may communicate with, an IP gateway (e.g., an IP multimedia subsystem (IMS) server) that serves as an interface between the core network 107 and the PSTN 108. In addition, the core network 107 may provide the WTRUs 102a, 102b, 102c with access to the networks 112, which may include other wired or wireless networks that are owned and/or operated by other service providers.

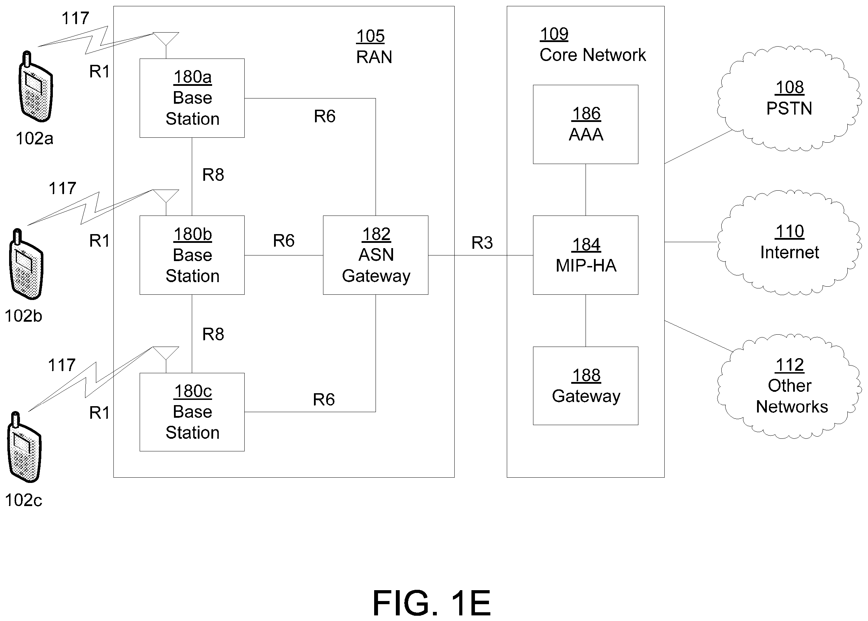

FIG. 1E is a system diagram of the RAN 105 and the core network 109 according to an embodiment. The RAN 105 may be an access service network (ASN) that employs IEEE 802.16 radio technology to communicate with the WTRUs 102a, 102b, 102c over the air interface 117. As will be further discussed below, the communication links between the different functional entities of the WTRUs 102a, 102b, 102c, the RAN 105, and the core network 109 may be defined as reference points.

As shown in FIG. 1E, the RAN 105 may include base stations 180a, 180b, 180c, and an ASN gateway 182, though it will be appreciated that the RAN 105 may include any number of base stations and ASN gateways while remaining consistent with an embodiment. The base stations 180a, 180b, 180c may each be associated with a particular cell (not shown) in the RAN 105 and may each include one or more transceivers for communicating with the WTRUs 102a, 102b, 102c over the air interface 117. In some embodiments, the base stations 180a, 180b, 180c may implement MIMO technology. Thus, the base station 180a, for example, may use multiple antennas to transmit wireless signals to, and receive wireless signals from, the WTRU 102a. The base stations 180a, 180b, 180c may also provide mobility management functions, such as handoff triggering, tunnel establishment, radio resource management, traffic classification, quality of service (QoS) policy enforcement, and the like. The ASN gateway 182 may serve as a traffic aggregation point and may be responsible for paging, caching of subscriber profiles, routing to the core network 109, and the like.

The air interface 117 between the WTRUs 102a, 102b, 102c and the RAN 105 may be defined as an R1 reference point that implements the IEEE 802.16 specification. In addition, each of the WTRUs 102a, 102b, 102c may establish a logical interface (not shown) with the core network 109. The logical interface between the WTRUs 102a, 102b, 102c and the core network 109 may be defined as an R2 reference point, which may be used for authentication, authorization, IP host configuration management, and/or mobility management.

The communication link between each of the base stations 180a, 180b, 180c may be defined as an R8 reference point that includes protocols for facilitating WTRU handovers and the transfer of data between base stations. The communication link between the base stations 180a, 180b, 180c and the ASN gateway 182 may be defined as an R6 reference point. The R6 reference point may include protocols for facilitating mobility management based on mobility events associated with each of the WTRUs 102a, 102b, 102c.

As shown in FIG. 1E, the RAN 105 may be connected to the core network 109. The communication link between the RAN 105 and the core network 109 may defined as an R3 reference point that includes protocols for facilitating data transfer and mobility management capabilities, for example. The core network 109 may include a mobile IP home agent (MIP-HA) 184, an authentication, authorization, accounting (AAA) server 186, and a gateway 188. While each of the foregoing elements are depicted as part of the core network 109, it will be appreciated that any one of these elements may be owned and/or operated by an entity other than the core network operator.

The MIP-HA may be responsible for IP address management, and may enable the WTRUs 102a, 102b, 102c to roam between different ASNs and/or different core networks. The MIP-HA 184 may provide the WTRUs 102a, 102b, 102c with access to packet-switched networks, such as the Internet 110, to facilitate communications between the WTRUs 102a, 102b, 102c and IP-enabled devices. The AAA server 186 may be responsible for user authentication and for supporting user services. The gateway 188 may facilitate interworking with other networks. For example, the gateway 188 may provide the WTRUs 102a, 102b, 102c with access to circuit-switched networks, such as the PSTN 108, to facilitate communications between the WTRUs 102a, 102b, 102c and traditional land-line communications devices. In addition, the gateway 188 may provide the WTRUs 102a, 102b, 102c with access to the networks 112, which may include other wired or wireless networks that are owned and/or operated by other service providers.

Although not shown in FIG. 1E, RAN 105 may be connected to other ASNs and the core network 109 may be connected to other core networks. The communication link between the RAN 105 the other ASNs may be defined as an R4 reference point, which may include protocols for coordinating the mobility of the WTRUs 102a, 102b, 102c between the RAN 105 and the other ASNs. The communication link between the core network 109 and the other core networks may be defined as an R5 reference, which may include protocols for facilitating interworking between home core networks and visited core networks.

Mobile phones (e.g. UEs or WTRUs) have evolved from voice centric monochrome devices with a minuscule screens and little processing power to devices with high resolution, palm sized screens and data processing power rivaling laptop computers. This transformation, coupled with an expanding cache of bandwidth hungry applications, has triggered demands for higher data rates. Mobile data traffic reportedly grew more than 24-fold between 2010 and 2015 and may grow more than 500-fold between 2010 and 2020. This has, in turn, propelled the uptake of 4G network equipment contracts and driven operators worldwide to deploy 4G networks. 4G supports high data rates (e.g. up to 1 Gbit/s) on the downlink.

Attention is turning from 4G towards next generation (e.g. 5G) technologies. Use cases that may influence 5G system architecture may include Enhanced Mobile Broadband (eMBB) connectivity, Massive Machine Type Communications (mMTC) and Ultra-Reliable Critical Communications (URCC) services.

5G may support higher data rates for uplink (UL) and downlink (DL). For example, uplink data throughput may be as high as or may exceed downlink data throughput. 5G may improve coverage and user experience, e.g., with higher data rate, lower latency and improved energy efficiency. IEEE 802.11 High Efficiency Wireless (HEW) may increase the presence of cellular operators, which may amalgamate different access technologies developed in different Standards Development Organizations (SDOs) to support future connectivity and data rates. 5G throughput and connectivity may be provided by multiple interconnected communication standards, which may, for example, range from wireless metropolitan area networks down to wireless personal area networks and wired networks.

Massive connectivity may be driven by the variety of things or objects (e.g. RFID tags, sensors, actuators and mobile phones) in the environment around us, which may be referred to as the Internet of Things (IoT). Objects or devices may interact with each other in a variety of ways and may generate huge amounts of data. The IoT and the Internet have converged and may continue converging with a multitude and variety of service scenarios. 5G systems may connect loosely defined smart objects (e.g. M2M or IoT devices) and may enable them to interact with other objects, e.g., to yield productivity and automation gains through predictive, actionable intelligence. For example, mobile devices may adopt silent mode when entering a meeting room per a request of a meeting moderator (e.g. indicated in a policy), may alert a user to and/or turn off the radio on the user's mobile phone before entering sensitive medical areas or may detect when a user enters a car and automatically connect to its sound system. Wireless sensors may let people check where their pet is in real-time and may control the temperature for each room of their home while they are out. Emergency services may be remotely and automatically alerted, for example, when a fire is detected in a building or when a patient's medical parameters shift beyond a critical threshold.

5G may provide increased service reliability for mission critical communications services such as intelligent transportation systems. 5G systems may provide resiliency and reliability.

5G wireless systems may improve data rates, efficiency and may enable new IoT services. 5G technologies may support traffic growth of 1000 times, for example, without a corresponding increase in CAPEX and OPEX costs. 5G system architecture may reduce costs for Mobile Operators or Service Providers. Cost reduction and flexibility for wireless networks may be achieved, for example, by reducing dependency on dedicated network functions and switching to generic COTS platforms, such as cloud computing utilizing virtualization technologies.

5G systems may provide automation and remote interaction. There may be security and privacy issues associated with 5G networks.

5G networks may be designed to connect industries, such as manufacturing and processing, intelligent transportation, smart grids and e-health. Different environments may cause issues for speed, latency and heterogeneity. Interaction by different platforms may mean different protocols, different interfaces and different policies (e.g. QoS requirements). Diverse service contexts may introduce various security and privacy considerations. For example, an e-health information system may have more privacy than a Home Automation System (HAS) that may have more security for Control Plane (CP) signaling. Network data handling capabilities may be improved to accommodate a large volume of data transported, stored and/or processed in 5G systems. Radio Network equipment that supports higher frequencies (e.g. Millimeter wave (mmW) 30GHz+) and core networks that store, forward and process data may be deployed, which may increase CAPEX and associated OPEX expenditures by mobile network service providers.

Processes and instrumentalities described herein may apply in any combination and may apply to other networks and wireless technologies. Although features and elements (including procedural steps) described herein in various examples may be shown or described in particular combinations and/or orders, each feature and element may be used alone or in any combination and in any order with and without other features and elements. Subject matter herein is applicable to a wider variety of examples and implementations, including in other wireless systems.

A WTRU or UE may refer to an identity of the physical device, or to the user's identity such as subscription related identities, *e.g.,* MSISDN, SIP URI, *etc.* WTRU (UE) may refer to application-based identities, e.g., user names that may be used per application.

The processes described above may be implemented in a computer program, software, and/or firmware incorporated in a computer-readable medium for execution by a computer and/or processor. Examples of computer-readable media include, but are not limited to, electronic signals (transmitted over wired and/or wireless connections) and/or computer-readable storage media. Examples of computer-readable storage media include, but are not limited to, a read only memory (ROM), a random access memory (RAM), a register, cache memory, semiconductor memory devices, magnetic media such as, but not limited to, internal hard disks and removable disks, magneto-optical media, and/or optical media such as CD-ROM disks, and/or digital versatile disks (DVDs). A processor in association with software may be used to implement a radio frequency transceiver for use in a WTRU, terminal, base station, RNC, and/or any host computer.

## Claims

1. A wireless transmit/receive unit (WTRU) configured to:
access configured network slice selection assistance information (NSSAI) that comprises one or more single-NSSAI (S-NSSAI);
determine that a first S-NSSAI of the one or more S-NSSAI in the configured NSSAI is private;
generate a requested NSSAI by excluding at least the first S-NSSAI from the configured NSSAI;
send a registration request message to an access network, wherein the registration request message comprises the requested NSSAI;
receive a registration accept message from a first access and mobility management function (AMF) of the access network;
wherein the registration accept message comprises an authorization indication flag indicating whether the WTRU is to send a requested network NSSAI that comprises private S-NSSAI excluded from the registration request message;
send a registration confirmation message to the first AMF;
determine, based on the authorization indication flag, to generate a requested NSSAI that comprises the one or more S-NSSAI of the configured NSSAI;
send a registration update message to the first AMF, wherein the registration update message comprises the generated requested NSSAI that comprises the one or more S-NSSAI of the Configured NSSAI; and
receive a registration accept message from a second AMF of the access network.

2. The WTRU of claim 1, wherein the WTRU is configured to send the registration update message upon a determination that a time has elapsed after receiving the registration accept message.

3. The WTRU of claim 1, wherein the WTRU is further configured to send the registration update message in response to determining at least one of the one or more S-NSSAI has not been sent to the AMF.

4. The WTRU of claim 1, wherein at least one of the one or more S-NSSAI is indicated as private, and wherein the indication that the at least one S-NSSAI is private comprises a privacy attribute of the at least one S-NSSAI.

5. The WTRU of claim 4, wherein the WTRU is further configured to send, as part of the registration request message, at least one of the one or more S-NSSAI that is not indicated as private.

6. The WTRU of claim 1, wherein the registration accept message comprises allowed NSSAI, wherein the allowed NSSAI comprises at least one of the one or more S-NSSAI.

7. A method comprising:
accessing, by a wireless transmit/receive unit (WTRU), configured network slice selection assistance information (NSSAI) that comprises one or more single-NSSAI (S-NSSAI);
determining, by the WTRU, that a first S-NSSAI of the one or more S-NSSAI in the configured NSSAI is private;
generating, by the WTRU, a requested NSSAI by excluding at least the first S-NSSAI from the configured NSSAI;
sending, by the WTRU, a registration request message to an access network, wherein the registration request message comprises the requested NSSAI;
receiving, by the WTRU, a registration accept message from a first access and mobility management function (AMF) of the access network;
wherein the registration accept message comprises an authorization indication flag indicating whether the WTRU is to send a requested network NSSAI that comprises private S-NSSAI excluded from the registration request message;
sending, by the WTRU, a registration confirmation message to the first AMF;
determining, by the WTRU, based on the authorization indication flag, to generate a requested NSSAI that comprises the one or more S-NSSAI of the configured NSSAI;
sending, by the WTRU, a registration update message to the first AMF, wherein the registration update message comprises the generated requested NSSAI that comprises the one or more S-NSSAI of the Configured NSSAI; and
receiving, by the WTRU, a registration accept message from a second AMF of the access network.

8. The method of claim 7, wherein at least one of the one or more S-NSSAI is indicated as private, and wherein the indication that the at least one S-NSSAI is private comprises a privacy attribute of the at least one S-NSSAI.

9. The method of claim 7 or the WTRU of claim 1, wherein the one or more S-NSSAI are part of configured NSSAI provisioned in the WTRU.

10. The method of claim 8, further comprising sending, as part of the registration request message, at least one of the one or more S-NSSAI that are not indicated as private.

11. The method of claim 7, wherein the registration accept message comprises allowed NSSAI, wherein the allowed NSSAI comprises at least one of the one or more S-NSSAI.

12. The method of claim 7, further comprising sending the registration update message upon a determination that a time has elapsed after receiving the registration accept message.

## Patentansprüche

1. Drahtlose Sende-/Empfangs-Einheit (WTRU), die konfiguriert ist zum:
Zugreifen auf konfigurierte Netz-Slice-Auswahl-Unterstützungsinformationen (NSSAI), die eine oder mehrere Einzel-NSSAI (S-NSSAI) umfassen;
Bestimmen, dass eine erste S-NSSAI der einen oder mehreren S-NSSAI in den konfigurierten NSSAI privat ist;
Erzeugen angeforderter NSSAI durch Ausschließen mindestens der ersten S-NSSAI von den konfigurierten NSSAI;
Senden einer Registrierungsanforderungsnachricht an ein Zugangsnetz, wobei die Registrierungsanforderungsnachricht die angeforderten NSSAI umfasst;
Empfangen einer Registrierungsannahmenachricht von einer ersten Zugangs- und Mobilitätsmanagementfunktion (AMF) des Zugangsnetzes;
wobei die Registrierungsannahmenachricht einen Berechtigungsangabemerker umfasst, der angibt, ob die WTRU eine angeforderte Netz-NSSAI, die eine private S-NSSAI, die von der Registrierungsanforderungsnachricht ausgeschlossen ist, umfasst, senden soll;
Senden einer Registrierungsbestätigungsnachricht an die erste AMF;
Bestimmen, dass angeforderte NSSAI, die die eine oder die mehreren S-NSSAI der konfigurierten NSSAI umfassen, erzeugt werden sollen, auf der Grundlage des Berechtigungsangabemerkers;
Senden einer Registrierungsaktualisierungsnachricht an die erste AMF, wobei die Registrierungsaktualisierungsnachricht die erzeugten angeforderten NSSAI, die die eine oder die mehreren S-NSSAI der konfigurierten NSSAI umfassen, umfasst; und
Empfangen einer Registrierungsannahmenachricht von einer zweiten AMF des Zugangsnetzes.

2. WTRU nach Anspruch 1, wobei die WTRU zum Senden der Registrierungsaktualisierungsnachricht nach einer Bestimmung, dass nach dem Empfang der Registrierungsannahmenachricht eine Zeit verstrichen ist, konfiguriert ist.

3. WTRU nach Anspruch 1, wobei die WTRU ferner zum Senden der Registrierungsaktualisierungsnachricht als Reaktion auf die Bestimmung, dass mindestens eine der einen oder mehreren S-NSSAI nicht an die AMF gesendet worden ist, konfiguriert ist.

4. WTRU nach Anspruch 1, wobei mindestens eine der einen oder mehreren S-NSSAI als privat angegeben ist und wobei die Angabe, dass die mindestens eine S-NSSAI privat ist, ein Privatsphäreattribut der mindestens einen S-NSSAI umfasst.

5. WTRU nach Anspruch 4, wobei die WTRU ferner zum Senden mindestens einer der einen oder mehreren S-NSSAI, die nicht als privat angegeben ist, als Teil der Registrierungsanforderungsnachricht konfiguriert ist.

6. WTRU nach Anspruch 1, wobei die Registrierungsannahmenachricht zugelassene NSSAI umfasst, wobei die zugelassenen NSSAI mindestens eine der einen oder mehreren S-NSSAI umfassen.

7. Verfahren, das umfasst:
Zugreifen auf konfigurierte Netz-Slice-Auswahl-Unterstützungsinformationen (NSSAI), die eine oder mehrere Einzel-NSSAI (S-NSSAI) umfassen, durch eine drahtlose Sende-/Empfangs-Einheit (WTRU);
Bestimmen, dass eine erste S-NSSAI der einen oder mehreren S-NSSAI in den konfigurierten NSSAI privat ist, durch die WTRU;
Erzeugen angeforderter NSSAI durch Ausschließen mindestens der ersten S-NSSAI von den konfigurierten NSSAI durch die WTRU;
Senden einer Registrierungsanforderungsnachricht an ein Zugangsnetz durch die WTRU, wobei die Registrierungsanforderungsnachricht die angeforderten NSSAI umfasst;
Empfangen einer Registrierungsannahmenachricht von einer ersten Zugangs- und Mobilitätsmanagementfunktion (AMF) des Zugangsnetzes durch die WTRU;
wobei die Registrierungsannahmenachricht einen Berechtigungsangabemerker umfasst, der angibt, ob die WTRU eine angeforderte Netz-NSSAI, die eine private S-NSSAI, die von der Registrierungsanforderungsnachricht ausgeschlossen ist, umfasst, senden soll;
Senden einer Registrierungsbestätigungsnachricht an die erste AMF durch die WTRU;
Bestimmen, dass angeforderte NSSAI, die die eine oder die mehreren S-NSSAI der konfigurierten NSSAI umfassen, erzeugt werden sollen, auf der Grundlage des Berechtigungsangabemerkers durch die WTRU;
Senden einer Registrierungsaktualisierungsnachricht an die erste AMF durch die WTRU, wobei die Registrierungsaktualisierungsnachricht die erzeugten angeforderten NSSAI, die die eine oder die mehreren S-NSSAI der konfigurierten NSSAI umfassen, umfasst; und
Empfangen einer Registrierungsannahmenachricht von einer zweiten AMF des Zugangsnetzes durch die WTRU.

8. Verfahren nach Anspruch 7, wobei mindestens eine der einen oder mehreren S-NSSAI als privat angegeben ist und wobei die Angabe, dass die mindestens eine S-NSSAI privat ist, ein Privatsphäreattribut der mindestens einen S-NSSAI umfasst.

9. Verfahren nach Anspruch 7 oder WTRU nach Anspruch 1, wobei die eine oder die mehreren S-NSSAI Teil konfigurierter NSSAI, die in der WTRU bereitgestellt sind, sind.

10. Verfahren nach Anspruch 8, das ferner das Senden mindestens einer der einen oder mehreren S-NSSAI, die nicht als privat angegeben ist, als Teil der Registrierungsanforderungsnachricht umfasst.

11. Verfahren nach Anspruch 7, wobei die Registrierungsannahmenachricht zugelassene NSSAI umfasst, wobei die zugelassenen NSSAI mindestens eine der einen oder mehreren S-NSSAI umfassen.

12. Verfahren nach Anspruch 7, das ferner das Senden der Registrierungsaktualisierungsnachricht nach einer Bestimmung, dass nach Empfang der Registrierungsannahmenachricht eine Zeit verstrichen ist, umfasst.

## Revendications

1. Unité d'émission/de réception sans fil (WTRU) configurée pour :
accéder à des informations d'aide à la sélection de tranches de réseau (NSSAI) configurées qui comprennent une ou plusieurs NSSAI uniques (S-NSSAI) ;
déterminer qu'une première S-NSSAI parmi la ou les S-NSSAI dans les NSSAI configurées est privée ;
générer une NSSAI demandée en excluant au moins la première S-NSSAI des NSSAI configurées ;
envoyer un message de demande d'enregistrement à un réseau d'accès, où le message de demande d'enregistrement comprend la NSSAI demandée ;
recevoir un message d'acceptation d'enregistrement en provenance d'une première fonction de gestion d'accès et de mobilité (AMF) du réseau d'accès ;
où le message d'acceptation d'enregistrement comprend un indicateur d'autorisation indiquant si la WTRU doit envoyer une NSSAI réseau demandée qui comprend une S-NSSAI privée exclue du message de demande d'enregistrement ;
envoyer un message de confirmation d'enregistrement à la première AMF ;
déterminer, sur la base de l'indicateur d'autorisation, la génération d'une NSSAI demandée qui comprend la ou les S-NSSAI des NSSAI configurées ;
envoyer un message de mise à jour d'enregistrement à la première AMF, où le message de mise à jour d'enregistrement comprend la NSSAI demandée générée qui comprend la ou les S-NSSAI des NSSAI configurées ; et
recevoir un message d'acceptation d'enregistrement en provenance d'une deuxième AMF du réseau d'accès.

2. WTRU selon la revendication 1, dans laquelle la WTRU est configurée pour envoyer le message de mise à jour d'enregistrement lorsqu'il est déterminé qu'une durée s'est écoulée après la réception du message d'acceptation d'enregistrement.

3. WTRU selon la revendication 1, dans laquelle la WTRU est en outre configurée pour envoyer le message de mise à jour d'enregistrement en réponse à la détermination qu'au moins l'une de la ou des S-NSSAI n'a pas été envoyée à l'AMF.

4. WTRU selon la revendication 1, dans laquelle au moins l'une de la ou des S-NSSAI est indiquée comme privée, et dans laquelle l'indication que l'au moins une S-NSSAI est privée comprend un attribut de confidentialité de l'au moins une S-NSSAI.

5. WTRU selon la revendication 4, dans laquelle la WTRU est en outre configurée pour envoyer, dans le cadre du message de demande d'enregistrement, au moins l'une de la ou des S-NSSAI qui ne sont pas indiquées comme privées.

6. WTRU selon la revendication 1, dans laquelle le message d'acceptation d'enregistrement comprend des NSSAI autorisées, où les NSSAI autorisées comprennent au moins l'une de la ou des S-NSSAI.

7. Procédé comprenant :
l'accès, par une unité d'émission/de réception sans fil (WTRU), à des informations d'aide à la sélection de tranches de réseau (NSSAI) configurées qui comprennent une ou plusieurs NSSAI uniques (S-NSSAI) ;
la détermination, par la WTRU, qu'une première S-NSSAI parmi la ou les S-NSSAI dans les NSSAI configurées est privée ;
la génération, par la WTRU, d'une NSSAI demandée en excluant au moins la première S-NSSAI des NSSAI configurées ;
l'envoi, par la WTRU, d'un message de demande d'enregistrement à un réseau d'accès, où le message de demande d'enregistrement comprend la NSSAI demandée ;
la réception, par la WTRU, d'un message d'acceptation d'enregistrement en provenance d'une première fonction de gestion d'accès et de mobilité (AMF) du réseau d'accès ;
où le message d'acceptation d'enregistrement comprend un indicateur d'autorisation indiquant si la WTRU doit envoyer une NSSAI réseau demandée qui comprend une S-NSSAI privée exclue du message de demande d'enregistrement ;
l'envoi, par la WTRU, d'un message de confirmation d'enregistrement à la première AMF ;
la détermination, par la WTRU, sur la base de l'indicateur d'autorisation, de la génération d'une NSSAI demandée qui comprend la ou les S-NSSAI des NSSAI configurées ;
l'envoi, par la WTRU, d'un message de mise à jour d'enregistrement à la première AMF, où le message de mise à jour d'enregistrement comprend la NSSAI demandée générée qui comprend la ou les S-NSSAI des NSSAI configurées ; et
la réception, par la WTRU, d'un message d'acceptation d'enregistrement en provenance d'une deuxième AMF du réseau d'accès.

8. Procédé selon la revendication 7, dans lequel au moins l'une de la ou des S-NSSAI est indiquée comme privée, et dans lequel l'indication que l'au moins une S-NSSAI est privée comprend un attribut de confidentialité de l'au moins une S-NSSAI.

9. Procédé selon la revendication 7 ou WTRU selon la revendication 1, dans lequel la ou les S-NSSAI font partie des NSSAI configurées fournies dans la WTRU.

10. Procédé selon la revendication 8, comprenant en outre l'envoi, dans le cadre du message de demande d'enregistrement, d'au moins l'une de la ou des S-NSSAI qui ne sont pas indiquées comme privées.

11. Procédé selon la revendication 7, dans lequel le message d'acceptation d'enregistrement comprend des NSSAI autorisées, où les NSSAI autorisées comprennent au moins l'une de la ou des S-NSSAI.

12. Procédé selon la revendication 7, comprenant en outre l'envoi du message de mise à jour d'enregistrement lorsqu'il est déterminé qu'une durée s'est écoulée après la réception du message d'acceptation d'enregistrement.
